# EUROPEAN PATENT SPECIFICATION

(11) **EP 3 348 471 B1**
(45) Date of publication and mention of the grant of the patent: **04.09.2019**
(21) Application number: 17382018.4
(22) Date of filing: 17.01.2017
(51) Int. Cl.: B64C 23/06

(54) **LIFTING SURFACE**
TRAGFLÄCHE
SURFACE DE LEVAGE

(43) Date of publication of application: 18.07.2018
(73) Proprietor: Airbus Operations, S.L., 28906 Getafe Madrid (ES)
(72) Inventor: GARCÍA NIETO, Carlos, 28906 Getafe (ES); VÉLEZ DE MENDIZÁBAL ALONSO, Iker, 28906 Getafe (ES); CRESPO PEÑA, Soledad, 28906 Getafe (ES); GUINALDO FERNÁNDEZ, Enrique, 28906 Getafe (ES); VÁZQUEZ CASTRO, Jesús Javier, 28906 Getafe (ES); TORRES SALAS, Álvaro, 28906 Getafe (ES)
(74) Representative: Elzaburu S.L.P.

(56) References cited:
- WO-A1-99/50141
- US-A- 3 586 267
- US-A- 5 755 408

## Description

### Field of the invention

The invention is related to a lifting surface having vortex generators in its surface.

### Background of the invention

A vortex generator is an aerodynamic surface, consisting of a small vane or bump that creates a vortex. Vortex generators delay flow separation and aerodynamic stalling thus improving the effectiveness of lifting/control surfaces.

Vortex generators are positioned in such a way that they have an angle of attack with respect to the local airflow. A vortex generator creates a tip vortex which draws energetic, rapidly-moving air from outside the slow-moving boundary layer into contact with the aircraft skin. The boundary layer normally thickens as it moves along the aircraft surface, reducing the effectiveness of trailing-edge control surfaces. Vortex generators can be used to remedy this problem, among others, by re-energizing the boundary layer allowing the airfoil to operate at higher angles-of-attack without airflow separation.

In terms of aircraft operability, the main benefits of using these devices apply to:
- Increment in maximum take-off weight.
- Increment in maximum landing weight.
- Aircraft noise reduction.
- Efficiency increment of aircraft control surfaces.

Although vortex generators are known and have been used for over many years, they continue being one of the most effective flow control devices. Nevertheless, it is also known that if they are fixed for improving performance in one flight regimen, they use to penalize the performance in other operational conditions.

It is known document US3586267 disclosin a device for regulating the setting angle of a control surface such as a flap or rudder on an aircraft comprising an inflatable bag located between the control surface and the fuselage.

### Summary of the invention

The control surface object of the invention comprises:
- a movable discontinuity located in the surface of the lifting surface; the movable discontinuity being movable between:
   o an active position in which the movable discontinuity acts as vortex generator, and
   o a passive position in which the movable discontinuity is integrated into the surface of the lifting surface without acting as vortex generator,
- a conduit located in the spanwise direction of the lifting surface and being located in communication with the movable discontinuity, the lifting surface comprising at least two openings in its surface spanwise distant from each other in communication with the conduit such that when the openings are open an airflow enters through one of the openings and exits from the other opening,
the movable discontinuity and the conduit being configured such that when an airflow goes through the conduit, this airflow activates the movable discontinuity to act as a vortex generator of the lifting surface.

The circulation of said airflow is possible both due to an active opening and closing of the openings or through a passive action due to the existence of a spanwise pressure gradient in the upper and lower faces of the lifting surface.

The openings are preferably located in the trailing edge. As the two openings are spanwise separated a given distance, when the openings are open, due to the aforementioned pressure gradient, an airflow goes along the conduit. An internal air current is created by pressure difference between two "trailing edge" span positions with openings.

### Description of the figures

To complete the description and in order to provide for a better understanding of the invention, a set of drawings is provided. Said drawings form an integral part of the description and illustrate preferred embodiments of the invention. The drawings comprise the following figures.
Figure 1 shows a schematic perspective view of a lifting surface having a trailing edge and a control surface.
Figure 2 shows a schematic perspective view of a part of the surface of a lifting surface.
Figures 3A and 3B show a schematic perspective view of a cross section of a first embodiment of the discontinuities and its conduit.
Figure 4 shows a schematic perspective view from the upper face of the upper skin of a lifting surface showing another embodiment of two movable discontinuities in an active position.
Figure 5 shows a schematic transversal view of two movable discontinuities in an active and a passive position.

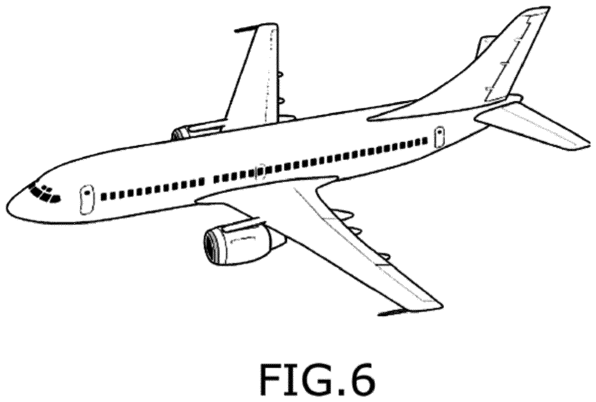

Figure 6 shows an aircraft having a lifting surface according to the invention.

### Detailed description of the invention

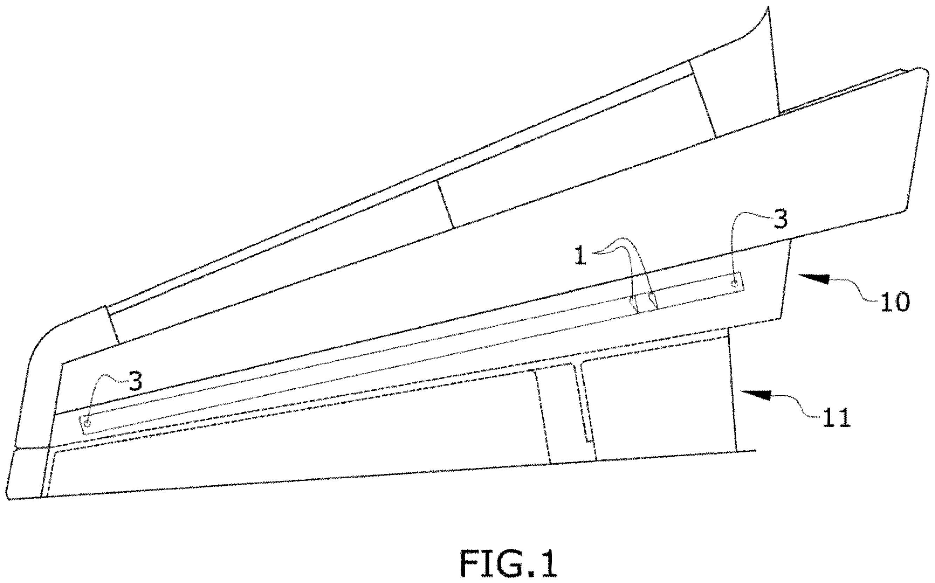

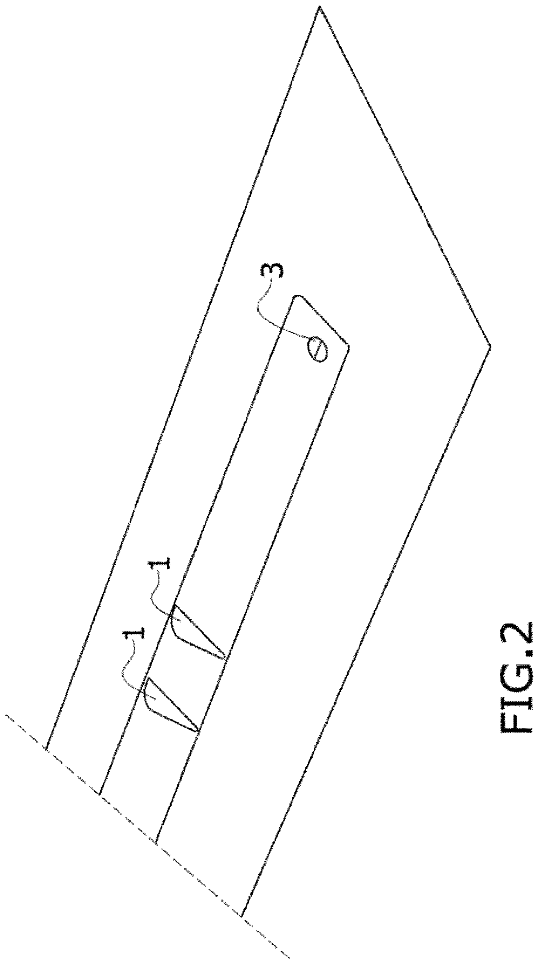

Figure 1 shows a schematic perspective view of a complete lifting surface having a trailing edge (10) and a control surface (11) being two movable discontinuities (1) located in the trailing edge (10) of the lifting surface, therefore upstream the control surface (11) in the direction of the coming flow. Additionally, two openings (3) are also shown. Figure 2 shows a schematic perspective view of a a part of the surface of the lifting surface shown in figure 1.

Another possibility would be having more than two openings (3) and controlling the opening and closing of the openings (3) to allow the activation of only some of the movable discontinuities (1). The opening and closing of the openings (3) can be made actively or passively, i.e. the openings can be activated by an order or by passive means related to the pressure gradient.

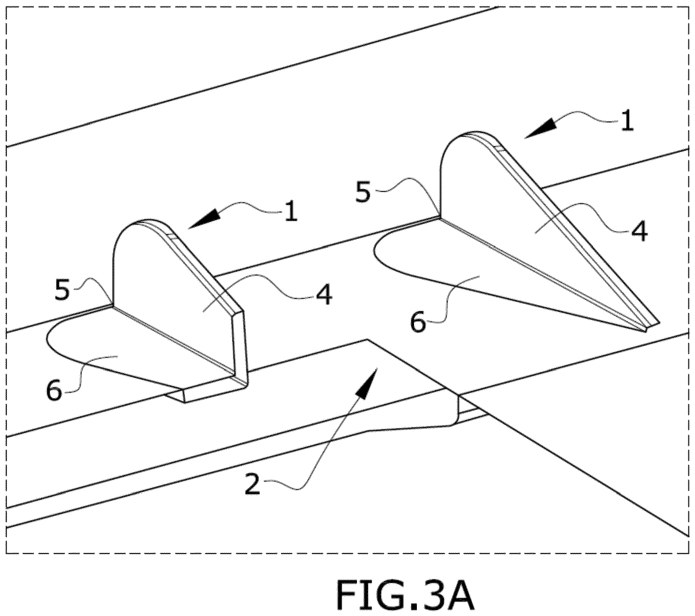

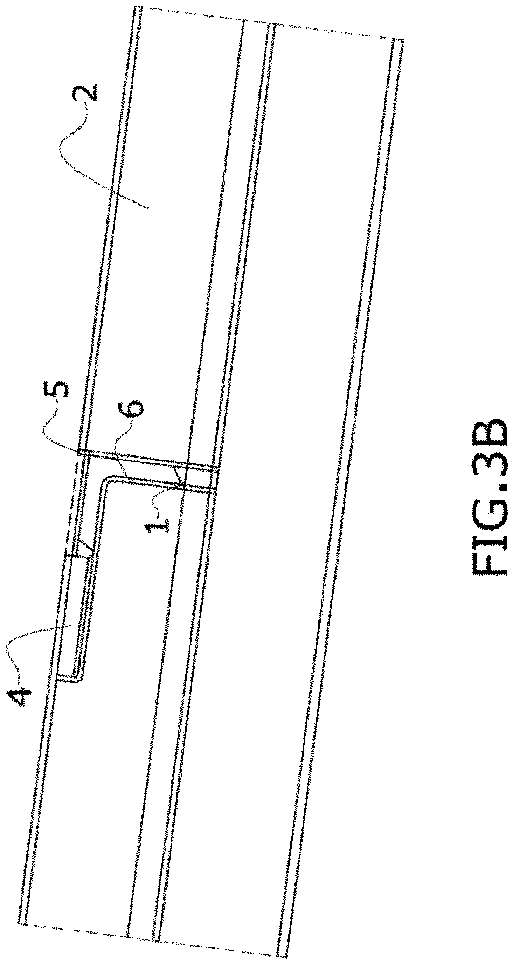

Figure 3 shows the spanwise conduit (2) and a first embodiment of the discontinuities (1). Figure 3A shows the movable discontinuity (1) in an active position and figure 3B in a pasive position.

The movable discontinuity (1) comprises a first part (4) movable between an active position in which it is deployed from the surface of the lifting surface and a passive position in which it is located into a recess of the lifting surface keeping the continuity of the skin as shown in figure 3B. The movable discontinuity (1) comprises a hinge line (5) for moving the first part (4) between the active and passive positions.

The movable discontinuity (1) further comprises a second part (6) movable between an active position in which it is located in the recess of the lifting surface thus covering said recess and a passive position in which it is located into the conduit (2). Said second part (6) therefore covers the orifice leaved by the deployment of the first part (4) and therefore when the vortex generator is out of the recess, said recess remains covered.

The air flowing in the interior of the conduit (2) pushes the first part (4) to be deployed and therefore it acts as a vortex generator. In case of being needed, a philosophy with "stops" can be implemented to avoid over rotation beyond the active or passive positions of the movable discontinuity, like, for instance, to include some marks on the lifting surface.

Vortex generators shapes can be different, i.e., rectangular, triangular, ogive, parabolic, gothic, inverse triangular, ... and the figures included are only representative of a possible shape, not being limited to this.

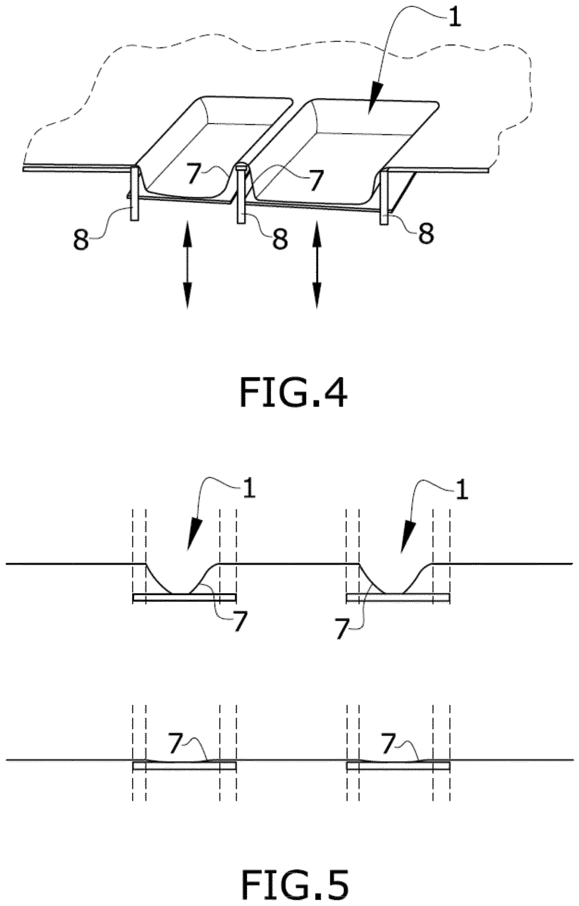

Figures 4 and 5 show another embodiment of the movable discontinuities (1).

The discontinuity (1) comprises a part of a flexible skin (7) of the lifting surface, said flexible skin (7) being movable between a passive position in which it is located flush with the rest of the theoretical profile of the lifting surface and an active position in which it departs from the surface of the lifting surface.

In the shown embodiment, the flexible skin (7) is sucked in forming a recess into the surface of the lifting surface and thus forming a vortex generator. Particularly, the recess is formed between two consecutive ribs (8) of the trailing edge (10) in the embodiment shown in figure 4.

In this embodiment the vortex generators are not "bumps" going out but "depressions" produced by an internal suction due to the lower pressure inside the conduit (2). When the air moves into the conduit (2), the pressure decreases due to the air current and therefore the pressure inside the conduit (2) is less than outside it.

Once the internal suction disappears, the skin that is flexible enough to allow the deformation but stiff enough to accept the pretension, returns to the equilibrium position as can be seen in figure 5.

The openings (3) would preferably be located in the surface of the lifting surface having a negative pressure gradient or what is the same, wherein the suction pressures are produced instead than in the positive pressures face of the lifting surface.

## Claims

1. Lifting surface comprising:
• a movable discontinuity (1) located in the surface of the lifting surface, the movable discontinuity (1) being movable between:
o an active position in which the movable discontinuity (1) acts as vortex generator, and
o a passive position in which the movable discontinuity (1) is integrated into the surface of the lifting surface without acting as vortex generator,
• a conduit (2) being located in communication with the movable discontinuity (1), the lifting surface comprising at least two openings (3) in its surface in communication with the conduit (2) arranged such that when the openings (3) are open an airflow enters through one of the openings (3) and exits from the other opening (3),
the movable discontinuity (1) and the conduit (2) being configured such that when an airflow goes through the conduit (2), this airflow activates the movable discontinuity (1) to act as a vortex generator of the lifting surface,
**characterised in that**
the conduit (2) is located in the spanwise direction of the lifting surface, the two openings (3) being spanwise distant from each other and the movable discontinuity (1) being located between the two openings (3) in the spanwise direction.

2. Lifting surface, according to claim 1, wherein the movable discontinuity (1) is located in the trailing edge (10) of the lifting surface.

3. Lifting surface, according to any preceding claim, wherein it comprises a plurality of openings (3) in its surface spanwise distant from each other in communication with the conduit (2).

4. Lifting surface, according to any preceding claim, wherein the openings (3) are located in the surface of the lifting surface having a negative pressure gradient.

5. Lifting surface, according to any preceding claim, wherein the movable discontinuity (1) comprises a first part (4) movable between the active position in which it is deployed from the surface of the lifting surface and a passive position in which it is located into a recess of the lifting surface.

6. Lifting surface, according to claim 5, wherein the movable discontinuity (1) comprises a hinge line (5) for moving the first part (4) between the active and passive positions.

7. Lifting surface, according to any preceding claim 5 or 6, wherein the movable discontinuity (1) further comprises a second part (6) rigidly connected to the first part (4) and movable between the active position in which it is located in a recess of the lifting surface covering said recess and a passive position in which it is located into the conduit (2).

8. Lifting surface, according to any preceding claim 1 to 5, wherein the discontinuity (1) comprises a part of a flexible skin of the surface of the lifting surface, said flexible skin (7) being movable between the pasive position in which the flexible skin (7) is located following the aerodynamic profile of the lifting surface and the active position in which the flexible skin (7) departs from the aerodynamic surface of the lifting surface to act as a vortex generator.

9. Lifting surface, according to claim 8, wherein the flexible skin (7) is sucked in into a recess in the surface of the lifting surface.

10. Lifting surface, according to claim 9, wherein the recess is located between two consecutive ribs (8).

11. Aircraft, comprising a lifting surface according to any preceding claim.

## Patentansprüche

1. Tragfläche mit:
• einer beweglichen Diskontinuität (1), die sich in der Oberfläche der Tragfläche befindet, wobei die bewegliche Diskontinuität (1) beweglich ist zwischen
o einer aktiven Position, in welcher die bewegliche Diskontinuität (1) als Wirbelerzeuger fungiert, und
o einer passiven Position, in welcher die bewegliche Diskontinuität (1) in die Oberfläche der Tragfläche integriert ist, ohne als Wirbelerzeuger zu fungieren,
• einer Leitung (2), die in Verbindung mit der beweglichen Diskontinuität (1) positioniert ist, wobei die Tragfläche mindestens zwei Öffnungen (3) in ihrer in Verbindung mit der Leitung (2) stehenden Oberfläche aufweist, die derart angeordnet sind, dass bei geöffneten Öffnungen (3) ein Luftstrom durch eine der Öffnungen (3) einströmt und durch die andere Öffnung (3) ausströmt,
wobei die bewegliche Diskontinuität (1) und die Leitung (2) derart ausgebildet sind, dass, wenn ein Luftstrom durch die Leitung (2) strömt, dieser Luftstrom die bewegliche Diskontinuität (1) aktiviert, so dass diese als Wirbelerzeuger der Tragfläche fungiert,
**dadurch gekennzeichnet, dass**
die Leitung (2) sich in Spannweitenrichtung der Tragfläche befindet, die zwei Öffnungen (3) in Spannweitenrichtung voneinander beabstandet sind und die bewegliche Diskontinuität (1) sich in Spannweitenrichtung zwischen den beiden Öffnungen (3) befindet.

2. Tragfläche nach Anspruch 1, wobei sich die bewegliche Diskontinuität (1) in der Tragflächenhinterkante (10) befindet.

3. Tragfläche nach einem der vorstehenden Ansprüche, wobei die Tragfläche mehrere Öffnungen (3) in ihrer Oberfläche aufweist, die in Verbindung mit dem Durchgang (2) in Spannweitenrichtung voneinander beabstandet sind.

4. Tragfläche nach einem der vorstehenden Ansprüche, wobei sich die Öffnungen (3) in der Oberfläche der Tragfläche mit einem negativen Druckgradienten befinden.

5. Tragfläche nach einem der vorstehenden Ansprüche, wobei die bewegliche Diskontinuität (1) einen ersten Teil (4) aufweist, der zwischen der aktiven Position, in der er von der Oberfläche der Tragfläche aufgeklappt ist, und einer passiven Position, in der er sich in einer Aussparung der Tragfläche befindet, beweglich ist.

6. Tragfläche nach Anspruch 5, wobei die bewegliche Diskontinuität (1) eine Klapplinie (5) aufweist, um den ersten Teil (4) zwischen der aktiven und der passiven Position hin und her zu bewegen.

7. Tragfläche nach einem der vorstehenden Ansprüche 5 oder 6, wobei die bewegliche Diskontinuität (1) ferner einen zweiten Teil (6) aufweist, der starr mit dem erste Teil (4) verbunden ist und zwischen der aktiven Position, in der er sich in einer Aussparung der Tragfläche befindet und die Aussparung bedeckt, und einer passiven Position, in der er sich in der Leitung (2) befindet, beweglich ist.

8. Tragfläche nach einem der vorstehenden Ansprüche 1 bis 5, wobei die Diskontinuität (1) einen Teil einer flexiblen Haut auf der Oberfläche der Tragfläche aufweist, wobei die flexible Haut (7) zwischen der passiven Position, in der die flexible Haut (7) entsprechend dem aerodynamischen Profil der Tragfläche angeordnet ist, und der aktiven Position, in der sich die flexible Haut (7) von der aerodynamischen Oberfläche der Tragfläche entfernt, um als Wirbelerzeuger zu fungieren, beweglich ist.

9. Tragfläche nach Anspruch 8, wobei die flexible Haut (7) in eine Aussparung in der Oberfläche der Tragfläche eingesaugt wird.

10. Tragfläche nach Anspruch 9, wobei sich die Aussparung zwischen zwei aufeinanderfolgenden Streben (8) befindet.

11. Flugzeug mit einer Tragfläche nach einem der vorstehenden Ansprüche.

## Revendications

1. Surface portante comprenant :
• une discontinuité mobile (1) située dans la surface de la surface portante, la discontinuité mobile (1) étant mobile entre :
- une position active dans laquelle la discontinuité mobile (1) fait office de générateur de tourbillons, et
- une position passive dans laquelle la discontinuité mobile (1) est intégrée dans la surface portante, sans former générateur de tourbillons,
• un conduit (2) étant placé en communication avec la discontinuité mobile (1), la surface portante comprenant au moins deux ouvertures (3) dans sa surface en communication avec le conduit (2), disposées de telle manière que lorsque les ouvertures (3) sont ouvertes, un écoulement d'air entre par l'une des ouvertures (3) et sort par l'autre ouverture (3),
la discontinuité mobile (1) et le conduit (2) étant configurés de telle manière que lorsqu'un écoulement d'air passe dans le conduit (2), l'écoulement d'air active la discontinuité mobile (1) pour qu'elle forme générateur de tourbillons de la surface portante,
**caractérisée en ce que** :
le conduit (2) est positionné dans la direction de l'envergure de la surface portante, les deux ouvertures (3) étant distantes l'une de l'autre dans le sens de l'envergure et la discontinuité mobile (1) étant placée entre les deux ouvertures (3) dans la direction de l'envergure.

2. Surface portante selon la revendication 1, dans laquelle la discontinuité mobile (1) est placée dans le bord de fuite (10) de la surface portante.

3. Surface portante selon l'une quelconque des revendications précédentes, comprenant une pluralité d'ouvertures (3) dans sa surface distantes les unes des autres dans le sens de l'envergure, en communication avec le conduit (2).

4. Surface portante selon l'une quelconque des revendications précédentes, dans laquelle les ouvertures (3) sont situées dans la surface de la surface portante ayant un gradient de pression négatif.

5. Surface portante selon l'une quelconque des revendications précédentes, dans laquelle la discontinuité mobile (1) comprend une première partie (4) mobile entre la position active dans laquelle elle est déployée depuis la surface de la surface portante et une position passive dans laquelle elle est située dans un évidement de la surface portante.

6. Surface portante selon la revendication 5, dans laquelle la discontinuité mobile (1) comprend une ligne d'articulation (5) pour mouvoir la première partie (4) entre les positions active et passive.

7. Surface portante selon l'une quelconque des précédentes revendications 5 et 6, dans laquelle la discontinuité mobile (1) comprend en outre une deuxième partie (6) connectée de manière rigide à la première partie (4) et mobile entre la position active dans laquelle elle se trouve dans un évidement de la surface portante en couvrant ledit évidement et une position passive dans laquelle elle se trouve dans le conduit (2).

8. Surface portante selon l'une quelconque des précédentes revendications 1 à 5, dans laquelle la discontinuité (1) comprend une partie d'une enveloppe souple de la surface de la surface portante, ladite enveloppe souple (7) étant mobile entre la position passive dans laquelle l'enveloppe souple (7) se trouve dans le prolongement du profil aérodynamique de la surface portante et la position active dans laquelle l'enveloppe souple (7) se détache de la surface aérodynamique de la surface portante pour faire office de générateur de tourbillons.

9. Surface portante selon la revendication 8, dans laquelle l'enveloppe souple (7) est aspirée dans un évidement présent dans la surface de la surface portante.

10. Surface portante selon la revendication 9, dans laquelle l'évidement est placé entre deux nervures consécutives (8).

11. Aéronef comprenant une surface portante selon l'une quelconque des revendications précédentes.
